(19) Europäisches Patentamt
European Patent Office
Office européen des brevets

(11) **EP 4 386 056 A1**

(12) **EUROPEAN PATENT APPLICATION**

(43) Date of publication:
**19.06.2024 Bulletin 2024/25**

(21) Application number: **22214092.3**

(22) Date of filing: **16.12.2022**

(51) International Patent Classification (IPC):
*C09D 133/08* [(2006.01)]     *C08F 265/06* [(2006.01)]

(52) Cooperative Patent Classification (CPC):
(C-Sets available)
**C09D 133/08; C08F 220/14; C08F 220/1804;**
**C08F 257/02; C08F 265/06;** C08F 2/22;
C08F 212/08                                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Organik Kimya Sanayi Ve Tic. A.S.**
**34075 Istanbul (TR)**

(72) Inventors:
• **Moscatelli, Davide**
  **34075 KEMERBURGAZ (TR)**
• **Ergun Ersen, Nur Basak**
  **34075 KEMERBURGAZ (FR)**

• **Arslan, Fatma**
  **34075 KEMERBURGAZ (TR)**
• **Kocabiyik, Ilker**
  **34075 KEMERBURGAZ (TR)**
• **Kaya, Gülizar**
  **34075 KEMERBURGAZ (TR)**
• **Karagöz, Sevki**
  **34075 KEMERBURGAZ (TR)**
• **Konus, Duygu**
  **34075 KEMERBURGAZ (TR)**
• **Demiray, Mehmet**
  **34075 KEMERBURGAZ (TR)**

(74) Representative: **Plasseraud IP**
  **66, rue de la Chaussée d'Antin**
  **75440 Paris Cedex 09 (FR)**

(54) **WATERBORNE POLYMER COMPOSITION AND PREPARATION METHOD THEREOF**

(57)    The present invention relates to waterborne polymer compositions comprising a polymer obtained with recycled monomers, said recycled monomers comprising specific chemical compounds at specific levels. The present invention also relates to a process for producing said polymer composition. The use of the waterborne polymer compositions in coating, paint, primer, ink, pressure sensitive adhesive, or varnish is also a part of the present invention.

EP 4 386 056 A1

(52) Cooperative Patent Classification (CPC): (Cont.)

C-Sets
**C08F 220/14, C08F 220/1802, C08F 220/06,
C08F 222/102;
C08F 220/1804, C08F 220/14, C08F 220/1802,
C08F 220/06, C08F 220/56;
C08F 257/02, C08F 212/08;
C08F 257/02, C08F 212/08, C08F 220/06;
C08F 265/06, C08F 220/1808, C08F 220/14,
C08F 220/1802;**
C08F 212/08, C08F 220/06

**Description**

**Technical domain of the invention**

The present invention relates to waterborne polymer compositions comprising a polymer obtained with recycled monomers, said recycled monomers comprising specific chemical compounds at specific levels. The present invention also relates to a process for producing said polymer composition. The use of the waterborne polymer compositions in coating, paint, primer, ink, pressure sensitive adhesive, or varnish is also a part of the present invention.

**Background of the invention**

One of the most important challenges of the 21st century is reducing the amount of residues produced by humans. Plastic and polymer production has grown faster than any other material since the 1950s. Polymers can be recycled but only a small part of plastic and polymer is effectively recycled. For some compound the recycling process is well-known and efficient at industrial scale.

Therefore, it is desirable to use recycled monomer to produce more sustainable polymers. But generally, the recycling process produce recycled monomer comprising high level of impurities, generally higher than in the corresponding virgin monomer.

The problem is that the impurities present in the recycled monomers, especially when their concentration is high, affects the technical performances of the polymer made with said recycled monomers. More the impurity level is high, higher is the deterioration of the performances of the resulting polymer. The reason is that the impurities are harmful to the polymerization of monomers.

To solve this problem the recycling process of polymers includes a purification step to avoid the contamination of recycled monomer with impurities and to decrease as much as possible the level of impurities contained in the recycled monomer. Different purification processes have been developed to reach this goal. But the purification process represents an additional step in the recycling process that induces cost increase and energy consumption.

It is desirable to find new solutions for example improved depolymerization process allowing the production of recycled monomers having the same purity, in other terms the same low level of impurities, as the virgin monomers.

Nevertheless, the problem of high level of impurity is still a problem for the reuse of recycled monomers because the impurities deteriorate the technical performances of the polymers.

It would therefore have been expected that the polymerization of recycled monomers comprising a high level of impurities, for example because not purified, would lead to polymers with degraded properties.

However, against all expectations, the Applicant has discovered that it was possible to use recycled monomers, preferably methyl methacrylate containing a substantial amount of specific impurities at specific levels, to obtain polymers having substantially the same performances and properties compare to polymers obtained with virgin monomers.

**Summary of the invention**

The present invention relates to a waterborne polymer composition comprising a polymer obtained from recycled monomer containing specific impurity at specific level. The present invention also relates to a multistage emulsion polymerization process for producing a waterborne polymer composition, and to the use of said composition in coating, textile, pressure sensitive adhesive, construction, and leather applications.

**Detailed description of the invention**

The present invention relates to a waterborne polymer composition comprising a polymer obtained from 1 to 100% by weight of at least one recycled monomer, wherein the recycled monomer comprises from 200 ppm to 30.000 ppm by weight of methyl isobutyrate.

The waterborne polymer composition is preferably an emulsion in which the polymer is present in particulates form in dispersion in an aqueous medium.

According to the invention, it is surprisingly possible to obtain polymer emulsion with recycled monomers, preferably recycled methyl methacrylate, without affecting the performances of the polymer, especially in certain technical domain such as coating. It is therefore possible to obtain polymers having satisfactory performances, even with recycled comprising a high level of specific impurities.

The present invention proposes a new way to obtain good performances polymers made with recycled monomers, preferably with recycled methyl methacrylate, with the possibility to avoid an additional step to decrease the impurity levels in said recycled monomer.

The recycled monomer

The general term "recycled monomers" as used herein and throughout the specification is intended to refer to the recovered monomers from recycling process, generally after the recycling process of a polymer.

In the present invention, the recycled monomer comprises specific impurities present in a specific amount.

The recycled monomer used in the invention comprises from 200 ppm to 30.000 ppm by weight of methyl isobutyrate, preferably from 300 ppm to 25.000ppm, more preferably from 400 ppm to 20.000 ppm, even more preferably from 500 ppm to 20.000 ppm, even more preferably from 800 ppm to 15.000 ppm.

The recycled monomer preferably also comprises from 1 ppm to 15.000 ppm by weight of comprises methylacrylate, preferably from 10 ppm to 14.000 ppm, more preferably from 100 ppm to 13.000 ppm, even more preferably from 200 ppm to 12.000 ppm, even more preferably from 500 ppm to 11.000 ppm, even more preferably from 1.000 ppm to 10.000 ppm.

The recycled monomer preferably also comprises from 100 ppm to 10.000 ppm by weight of methyl propanoate, preferably from 200 ppm to 8.000 ppm, more preferably from 500 ppm to 6.000 ppm, even more preferably from 1.000 ppm to 5.000 ppm, even more preferably from 1.500 ppm to 4.000 ppm.

The recycled monomer preferably also comprises from 1 ppm to 15.000 ppm by weight of ethyacrylate, preferably from 10 ppm to 10.000 ppm, more preferably from 100 ppm to 8.000 ppm, even more preferably from 200 ppm to 6.000 ppm, even more preferably from 500 ppm to 6.000 ppm, even more preferably from 1.000 ppm to 5.000 ppm.

The recycled monomer preferably also comprises from 1 ppm to 15.000 ppm by weight of methyl pivalate, preferably from 10 ppm to 12.000 ppm, more preferably from 100 ppm to 10.000 ppm, even more preferably from 200 ppm to 8.000 ppm, even more preferably from 500 ppm to 7.000 ppm, even more preferably from 1.000 ppm to 6.000 ppm.

The recycled monomer preferably comprises from 200 ppm to 30.000 ppm of methyl isobutyrate, and at least one compound, preferably at least two, more preferably at least three, selected from the list comprising methyacrylate, methyl propanoate, ethylacrylate and methyl pivalate, the amount of said compounds being selected from the respecify ranges described above.

The recycled monomer preferably comprises from 200 ppm to 30.000 ppm of methyl isobutyrate, and from 1 ppm to 15.000 ppm by weight of comprises methylacrylate, and/or from 100 ppm to 10.000 ppm by weight of methyl propanoate, and/or from 1 ppm to 15.000 ppm by weight of ethyacrylate, and/or from 1 ppm to 15.000 ppm by weight of methyl pivalate.

The recycled monomer more preferably comprises from 200 ppm to 30.000 ppm of methyl isobutyrate, and from 1 ppm to 15.000 ppm by weight of comprises methylacrylate, and from 100 ppm to 10.000 ppm by weight of methyl propanoate, and from 1 ppm to 15.000 ppm by weight of ethyacrylate, and from 1 ppm to 15.000 ppm by weight of methyl pivalate.

The recycled monomers may also preferably further comprises methanol, methylacetate, and/or methylethylketone, and/or benzene, and/or toluene, and/or methylbutanoate, and/or dimethylhexadiene, and/or methyl 2-methylbutyrate, and/or 2-exyl 1-hexen, and/or n-propylcyclopentane. The amount of said compounds in the recycled monomer is preferably comprised between 1 ppm and 4.000 ppm, more preferably between 5 ppm and 2.000 ppm, more preferably between 25 ppm and 1.000 ppm.

The determination of the amount of impurities in the recycled monomers is made by gas chromatography analysis. A non-limiting example of gas chromatography device that can be used for this purpose is Agilent 7890B with headspace Agilent 7697A and mass detector Agilent 5977B. The skilled man of the art knows how to determine the amount of an impurity in a sample with known gas chromatography method.

The recycled monomer is preferably methyl methacrylate or styrene. The recycled monomer is more preferably methyl methacrylate.

The recycled monomer is obtained by a recycling process, generally after the recycling process of a polymer. In the present invention, the recycled monomer is preferably obtained by a recycling process that does not comprise a purification step. In the present invention the term "purification step" means an additional process step in which the amount of impurities present in the recycled monomer is decreased compare to the amount of impurities present in the recycled monomer directly obtained from the recycling process, for example the depolymerization of polymers.

In other terms the recycled monomer used in the present invention is preferably not purified in a purification step. The recycled monomer used in the invention preferably comprises the impurities present at the end of the recycling process, and without an additional purification step.

According to an embodiment of the present invention, the recycled methyl methacrylate is obtained via chemical recycling of poly(methyl methacrylate) (PMMA). Contrary to many polymers, quantitative depolymerization of pure PMMA to the initial monomer is likely to occur.

Thermal cracking or pyrolysis process including the degradation of the polymeric material by heating under inert atmosphere is employed in chemical recycling of PMMA. Thermal decomposition of PMMA to MMA takes place at temperatures above ceiling temperature where the rate of propagation is equal to the rate of depropagation. During depolymerization, the chain backbone of the macromolecule is split by free radical mechanism. Initial molecular weight and pyrolysis temperature influence on thermal depolymerization mechanism of PMMA. While end-chain scission is favored in the temperature range of 330 to 400 °C, random chain scission and initiation are favored at temperatures above 400 °C.

The polymer

The polymer of the invention is preferably obtained :

- from 1 to 100 % by weight of at least one recycled monomer;
- optionally from 0.1 to 50% by weight of at least one additional monomer;
- optionally from 0.1 to 50% by weight of at least one biobased monomer.

The polymer of the invention is preferably obtained :

- from 1 to 100 %by weight of at least one recycled monomer;
- from 0.1 to 50% by weight of at least one additional monomer;
- optionally from 0.1 to 50% by weight of at least one biobased monomer.

The polymer of the invention is preferably obtained :

- from 1 to 100 %by weight of at least one recycled monomer;
- from 0.1 to 50% by weight of at least one additional monomer;
- from 0.1 to 50% by weight of at least one biobased monomer having a biobased carbon content between 10% by weight and 100% by weight relative to the total weight of carbon of said monomer, the biobased carbon content being measured according to ASTM D6866-22 Standard.

The polymer of the invention is preferably obtained from 2,5 to 95% of at least one recycled monomer, more preferably from 5 to 85%, even more preferably from 10 to 80 %, even more preferably from 15 to 70 % by weight.

The polymer of the invention is preferably obtained from 5% to 97.5% by weight of at least one additional monomer, more preferably from 20% to 90% by weight.

According to the invention, additional monomers mays be chosen from the list comprising ethylenically unsaturated monomers preferably selected from the list comprising alkyl acrylates or alkyl methacrylates such as linear, branched or cycloaliphatic Ci-C22-alkyl(meth)acrylates, methyl(meth)acrylate, ethyl(meth)acrylate,n-butyl(meth)acrylate, isobutyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl- (meth)acrylate and tert-butyl(meth)acrylate, aryl(meth)acrylates, benzyl(meth)acrylate and phenyl(meth)- acrylate, tetrahydrofurfuryl(meth)acrylate, methoxyethoxyethyl(meth)- acrylate, 1 - butoxypropyl(meth)acrylate,cyclohexyloxymethyl(meth)acrylate,methoxymethoxyethyl(meth )acrylate, benzyloxymethyl(meth)acrylate, furfuryl-(meth)acrylate, 2-butoxy ethyl (meth)acrylate, 2-ethoxyethyl(meth)acrylate, allyloxymethyl(meth)acrylate, 1 - ethoxybutyl(meth)acrylate, 1 -ethoxyethyl- (meth)acrylate,ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxy-butyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10 (meth)acrylamides, acid functional monomers such as acrylic acid, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

In a preferred mode, the least one additional monomer is carboxyl functional monomer, said carboxyl functional monomer being preferably chosen from the group comprising acrylic acid, methacrylic acid, crotonic acid, maleic acid, itaconic acid, mesaconic acid, fumaric acid, methylenemalonic acid, citraconic acid or mixtures thereof.

The polymer of the invention is preferably obtained from 0 to 70% by weight of at least one biobased monomer, more preferably from 5 to 50% by weight.

According to the invention, the biobased monomer is at least partially of renewable and non-fossil sources. According to the invention, the expression "at least partly of renewable and non-fossil sources" means that the biobased monomer has a biobased carbon content preferably between 10% by weight and 100% by weight relative to the total weight of carbon of said monomer.

The biobased carbon content is measured according to ASTM D6866-22 Standard.

In the context of the invention, the ASTM D6866-22 standard is used to characterize the biobased nature of a chemical compound, and to determine the biobased carbon content of said compound. The value is expressed as a percentage by weight of biobased carbon relative to the total weight of carbon in said compound.

ASTM D6866-22 is a test method that teaches how to experimentally measure the bio-based carbon content of solids, liquids, and gaseous samples by radiocarbon analysis.

This standard mainly uses the technology of the AMS (Accelerator Mass Spectrometry). This technique is used to naturally measure the radionuclides present in a sample, in which the atoms are ionized, then accelerated to high energies, then separated, and individually counted in Faraday collectors. This high-energy separation is extremely effective at filtering out isobaric interference, so the AMS is able to accurately measure the abundance of carbon-14 by compared to carbon 12 (14C/12C) to an accuracy of $1.10^{-15}$.

This standard makes it possible to directly distinguish carbon atoms from contemporary carbon from carbon atoms of fossil origin.

The biobased monomer has preferably a biobased carbon content comprised between 20% by weight and 100% by weight relative to the total weight of carbon of said monomer, more preferably more than 30%, even more preferably more than 50%, even more preferably more than 70%, even more preferably more than 90% by weight. In a preferred mode of the invention the biobased monomer has a biobased carbon content of 100% by weight.

The biobased monomer is preferably chosen from the list comprising ethylacrylate, lauryl (meth)acrylate, isobornyl (meth)acrylate, tetrahydrafurfuyl (meth)acrylate, stearyl acrylate, n-octyl acrylate, n-butyl methacrylate, methyl methacrylate, vanillin methacrylate, neopentyl glycol diacrylate, trimethyloyl propane triacrylate, pentaerythritol tetraacrylate, dipentaerythritol pentaacrylate.

The biobased monomer is more preferably ethylacrylate, lauryl (meth)acrylate, or a mixture thereof.

The polymer of the waterborne polymer composition of the invention has preferably a weight average molecular weight within the range of 100.000 to 20 million Daltons, preferably within the range of 200.000 to 10 million, more preferably within the range of 500.000 to 5 million Daltons.

The weight average molecular weights of polymeric stabilizers are determined by Gel Permeation Chromatography (GPC). It is for example determined using a device such as Jasco 2000 series Gel Permeation Chromatography (GPC) coupled with differential refractive index detector and following the exemplified but not limiting method. The sample is dissolved in THF at a concentration of 5 mg/mL and filtered through 0.45 $\mu$m PTFE filter. 30 $\mu$L of the polymer solution are injected into the system. The separation is performed in THF at a constant flow rate of 1 mL/min and at 40 °C using three styrene-divinyl benzene columns (300 mm x 8 mm I.D.) in series each with particle size of 5 $\mu$m and porosity of 1000, 100000 and 1000000 Å, respectively. A guard column (30 mm x 8 mm) with particle size of 5 $\mu$m is included before the analytical columns. Calibration is performed using a series of polystyrene standards from 580 to 3'200'000 g/mol. The molar masses obtained are either an interpolation or an extrapolation from the calibration curve.

Emulsion Polymerization process

The waterborne polymer composition is preferably obtained by emulsion polymerization.

The Applicant has discovered that this method of polymerization is particularly advantageous to obtain polymers with recycled monomers containing a substantial amount of specific impurities at specific levels, said polymers having substantially the same performances and properties than the polymers made with virgin monomers.

Emulsion polymerization is a type of free radical polymerization process which generally starts with an emulsion incorporating water, at least one monomer and at least one surfactant. The polymerization is generally initiated with a polymerization initiator. The resulting polymers produced in such a way are polymer particles dispersed in the water phase.

By emulsion polymerization we preferably exclude the inverse emulsion polymerization.

The waterborne Polymer composition of the invention is preferably obtained by an emulsion polymerization process comprising:

a. Preparing a mixture comprising at least one surfactant and/or at least one polymeric stabilizer, and at least one recycled monomer;
b. Initiating the polymerization;
c. Obtaining a polymer emulsion.

In a first aspect of the invention, the emulsion polymerization is made in the presence of at least one surfactant.

According to this first aspect, the waterborne polymer composition of the invention is preferably obtained by a multistage emulsion polymerization process comprising:

a. a first stage comprising the polymerization of a mixture comprising:

i. water;
ii. at least one surfactant;
iii. at least one ethylenically unsaturated monomer;
iv. at least one recycled monomer;
v. optionally at least one carboxyl functional monomer;
vi. optionally at least one crosslinking functional or multi-ethylenically unsaturated monomer;

b. a second stage in which the polymer of the waterborne polymer composition is obtained by polymerizing:

i. at least the product obtained in the first stage;
ii. at least one surfactant;
iii. optionally at least one recycled monomer;
iv. optionally at least one crosslinking functional or multi-ethylenically unsaturated monomer;

According to this first aspect, the waterborne polymer composition of the invention may also be preferably obtained by a multistage emulsion polymerization process comprising:

a. a first stage comprising the polymerization of a mixture comprising:

i. water;
ii. at least one surfactant;
iii. at least one ethylenically unsaturated monomer;
iv. optionally at least one recycled monomer;
v. optionally at least one carboxyl functional monomer;
vi. optionally at least one crosslinking functional or multi-ethylenically unsaturated monomer;

b. a second stage in which the polymer of the waterborne polymer composition is obtained by polymerizing:

i. at least the product obtained in the first stage;
ii. at least one surfactant;
iii. at least one recycled monomer;
iv. optionally at least one crosslinking functional or multi-ethylenically unsaturated monomer;

In a preferred mode of this first aspect, at least one crosslinking functional or multi-ethylenically unsaturated monomer is used in the second stage.
In a preferred mode of this first aspect, at least one recycled monomer is used in the first stage, and at least one recycled monomer is used in the second stage.
In this aspect of the invention, at least one ethylenically unsaturated monomer may be advantageously used in the second stage.
These preferred modes may be combined.
The surfactant may be an anionic, non-ionic, cationic, zwitterionic and polymerizable surfactant, especially selected from the group consisting of anionic organic sulfates and sulfonates and non-ionic alkylene oxides, especially ethylene and/or propylene oxides and combinations thereof, preferably selected from the group consisting of organic sulfonates, particularly dodecyl diphenyloxide disulfonates, more particularly sodium dodecyl sulfate, and polymerizable surfactants (surfmers), especially (meth)acrylate, allyl, alkyl, styrenic, maleate, fumarate, crotonate, allyloxy and acrylamide functional groups containing anionic and non-ionic polymerizable surfactants, preferably, ammonium polyoxyalkylene alkenylether sulfates (e.g. Latemul PD-104, Kao Corporation), phosphate esters of polyalkylene monomethacrylates (e.g. Sipomer PAM 200, Solvay), polyoxyethylene styrenated propenyl phenyl ether sulfate ammonium salts (e.g. HITENOL AR series, DKS surfactants), polyoxyethylene-1 - (allyloxymethyl) alkyl ether sulfate ammonium salts (e.g. HITENOL KH series, DKS surfactants), polyoxyethylene-1 -(allyloxymethyl) alkyl ethers (e.g., NOIGEN KN series, DKS surfactants), polyoxyethylene styrenated propenyl phenyl ethers (e.g., NOIGEN AN series, DKS surfactants).
Appropriate surfactants, could also be anionic surfactants, such as e.g. alkyl, alkyl phenyl or styrenated phenyl sulfates and sulfonates, especially sodium dodecyl sulfate, or polymerizable anionic surfactants containing sulfates and sulfonates together with allyl, propenyl and propenyl phenyl polymerizable groups, or polymerizable non-ionic surfactants with hydrophilic part containing ethylene oxide or propylene oxide groups or mixtures of both together with polymerizable groups like allyl, propenyl and propenyl phenyl.
Suitable cationic surfactants could be benzalkonium chloride, cetylpyridinium chloride, benzethonium chloride, alkyltrimethylammonium salts such as cetyl trimethylammonium bromide and cetyl trimethylammonium chloride, lauryl trimethyl ammonium chloride, C.C.C7-trimethyl ammonium bromides, halide salts of quaternized polyoxyethylalkylamines, dodecylbenzyl tri ethyl ammonium chloride, MIRAPOL(R) and ALKAQUATR (available from Alkaril Chemical Company) or SANIZOL(R) (benzalkonium chloride, available from Kao Chemicals),

Suitable zwitterionic surfactants could be cholamidopropyl)dimethylammonio]-1-propanesulfonate) and betaines such as cocamidopropyl betaine have a carboxylate with the ammonium.

The surfactant is preferably used at a concentration from 0.01 to 5 % by weight, more preferably from 0.05 to 2.5 % by weight, based on the total amount of monomers in said polymer.

The ethylenically unsaturated monomers preferably selected from the list comprising alkyl acrylates or alkyl methacrylates such as linear, branched or cycloaliphatic Ci-C22-alkyl(meth)acrylates, methyl(meth)acrylate, ethyl(meth)acrylate,n-butyl(meth)acrylate, isobutyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl- (meth)acrylate and tert-butyl(meth)acrylate, aryl(meth)acrylates, benzyl(meth)acrylate and phenyl(meth)-acrylate, tetrahydrofurfuryl(meth)acrylate, methoxyethoxyethyl(meth)- acrylate, 1 - butoxypropyl(meth)acrylate,cyclohexyloxymethyl(meth)acrylate,methoxymethoxyethyl(meth )acrylate, benzyloxymethyl(meth)acrylate, furfuryl-(meth)acrylate, 2-butoxy ethyl (meth)acrylate, 2-ethoxyethyl(meth)acrylate, allyloxymethyl(meth)acrylate, 1 - ethoxybutyl(meth)acrylate, 1 -ethoxyethyl- (meth)acrylate,ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxybutyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10 (meth)acrylamides, acid functional monomers such as acrylic acid, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

In a second aspect of the invention, the emulsion polymerization is made in the presence of at least one polymeric stabilizer.

When the emulsion polymerization is made with at least one polymeric stabilizer, said polymeric stabilizer is preferably made in the first stage of the process, and said polymeric stabilizer is preferably used in the second stage of the process.

According to this second aspect, the waterborne polymer composition of the invention is preferably obtained by a multistage emulsion polymerization process comprising:

    a. a first stage in which a polymeric stabilizer is obtained by polymerizing a mixture comprising:

        i. water;
        ii. at least one carboxyl functional monomer;
        iii. optionally at least one surfactant;
        iv. optionally at least one recycled monomer;
        v. optionally at least one crosslinking functional or multi-ethylenically unsaturated monomer;

    b. a second stage in which the polymer of the waterborne polymer composition is obtained by polymerizing:

        i. at least the polymeric stabilizer obtained in the first stage;
        ii. at least one recycled monomer;
        iii. optionally at least one surfactant;
        iv. optionally at least one crosslinking functional or multi-ethylenically unsaturated monomer;

In a preferred mode of this aspect, at least one crosslinking functional or multi-ethylenically unsaturated monomer is used in the second stage.

In a preferred mode of this aspect, at least one surfactant is used in the first stage.

In a preferred mode of this aspect, at least one recycled is used in the first stage.

In a preferred mode of this aspect, at least one ethylenically unsaturated monomer is used in the first stage and/or in the second stage.

These preferred modes may be combined.

In the first stage, water content is preferably from 50 to 95% by weight, based on the total weight of said first mixture, more preferably from 60% to 80%.

In the first stage, the amount of the at least one carboxyl functional monomer amount is preferably from 1 to 60% by weight, more preferably from 2 to 40% by weight, even more preferably from 5 to 30% by weight, the percentage being based on the total amount of monomer in the first stage.

The carboxyl functional monomer is preferably chosen from the group comprising acrylic acid, methacrylic acid, crotonic acid, maleic acid, itaconic acid, mesaconic acid, fumaric acid, methylenemalonic acid, citraconic acid or mixtures thereof.

In the first stage, the amount of the at least recycled monomer is from 0% to 90%, preferably 10% to 90%, more preferably from 20 to 90%, even more preferably from 40 to 90%, even more preferably from 60 to 90% by weight, the percentage being based on the total amount of monomer in the first stage.

The recycled monomer is preferably methyl methacrylate.

The amount of the at least one crosslinking functional or multi-ethylenically unsaturated monomer is from 0% to 30%, preferably 0.01% to 20%, more preferably from 0.1 to 15%, the percentage being based on the total amount of monomer in the first stage.

The crosslinking functional or multi-ethylenically unsaturated monomer is preferably chosen from the list comprising N-methylol acrylamide, N-methylolmethacrylamide, N-(alkoxymethyl)acrylamides or N-(alkoxymethyl)methacrylamides containing a C1-C6-alkyl radical, e.g. N-isobuthoxymethyl)acrylamide (IBMA), N-(isobutoxymethyl)methacrylamide (IBMMA), N-(n-butoxymethyl)acrylamide (NBMA), N-(n-butoxymethyl)methacrylamide (NBMMA), diacetone acrylamide (DIAAM); multiple ethylenically unsaturated comonomers such as ethylene glycol diacrylate, 1,3- butylene glycol di(meth)acrylate, 1,4-butylene glycol di(meth)acrylate, propylene glycol diacrylate, divinyl adipate, divinyl benzene, vinyl methacrylate, vinyl acrylate, allyl (meth)acrylate, diallyl maleate, diallyl phthalate, diallyl fumarate, methylenebisacrylamide, cyclopentadienyl acrylate or triallyl cyanurate.

The polymerization is preferably made in the presence of a polymerization initiator.

Suitable initiators could be, thermal polymerization initiators, redox polymerization initiators and combinations thereof, particularly inorganic and/or organic persulfates, peroxides, hydroperoxides, perbenzoates, peralkanoates, azoinitiators and combinations thereof, more preferably selected from the group consisting of inorganic and/or organic persulfates, more particularly selected from the group consisting of potassium persulfate (KPS), sodium persulfate (NaPS) and ammonium persulfate (APS).

The initiator system may, for example, be chosen among thermal initiators, redox initiators or combinations thereof, for example tert-butyl hydroperoxide, cumene hydroperoxide, tert-butyl perbenzoate, tert-butyl 2-ethyl perhexanoate, hydrogen peroxide and benzoyl peroxide. Either oil-and/or water-soluble initiators may be used. Suitable reducing agents of a redox initiator system may include compounds, such as sulfur compounds with a low oxidation state, such as sulfites, hydrogen sulfites, alkali metal bisulfites, ketone adducts of bisulfites, such as acetone bisulfite, alkali metal disulfites, metabisulfites and its salts, thiosulfates, formaldehyde sulfoxylates and its salts, reducing nitrogen compounds, such as hydroxylamines, hydroxylamine hydrosulfate and hydroxylammonium salts, polyamines and reducing sugars, such as sorbose, fructose, glucose, lactose and derivatives thereof, enediols, such as ascorbic acid and isoascorbic acid, sulfinic acids, hydroxy alkyl sulfinic acids, such as hydroxy methyl sulfinic acid and 2-hydroxy-2-sulfinactic acid and its salts. Redox initiators are typically used in combination with trace amounts of metal such as iron, for example supplied as ferrous sulfate.

The polymerization is preferably made in the presence of a chain transfer agent. This is particularly advantageous in the first stage.

Suitable chain-transfer agents could be isopropanol, mercaptoethanol, 3-mercaptopropanol, 3-mercaptopropionic acid, 1-butanethiol, 1-propanethiol, 1-prentanethiol, 2-methyl-2-propaneethiol, 1-hexanethiol, 1-octanethiol, tert-nonyl mercaptane, n-dodecyl mercaptane, tert-dodecyl mercaptane, 3-mercapto-3-methyl butanol, 1-mercapto-2-phenyl-2-ethanol, thioglycolic acid, methyl thioglycolate, n-butyl thioglycolate, 2-ethylhexyl thioglycolate, i-octyl thioglycolate, dodecyl thioglycolate, octadecyl thioglycolate, methyl-3-mercaptopropionate, butyl-3-mercaptopropionate, isooctyl-3-mercaptopropionate, isodecyl-3-mercaptopropionate, dodecyl-3-mercaptopropionate, octadecyl-3-mercaptopropionate, , 4-methylbenzene thiol, benzenethiol, 4,4'-thiobisbenzenethiol, azelaic alkyl mercaptane, tetrabromomethane and carbon tetrachloride.

The term "polymeric stabilizer (PS)" as used herein and throughout the specification refers to a type of polymeric surfactants which have generally both hydrophobic moieties and carboxylic acid functional groups. They are macromolecules used as surfactants in conventional emulsion polymerization and widely used for producing water-based latexes with improved colloidal properties. This type of an emulsion polymerization process is also referred to as supported emulsion polymerization wherein polymeric stabilizers are the support resins, according to this terminology. The support resins are used in addition to or completely replacing conventional surfactants to colloidally stabilize the growing polymer particles in the emulsion.

When the polymeric stabilizer is obtained from with recycled monomer, the expression "recycled polymeric stabilizer" (RPS) is used.

The polymeric stabilizer has preferably a weight average molecular weight within the range of 1.000 to 120.000 Daltons, preferably within the range of 5.000 to 60.000, more preferably within the range of 10.000 to 50.000, even more preferably within the range of 10.000 to 30.000 Daltons.

The weight average molecular weights of polymeric stabilizers are determined by Gel Permeation Chromatography (GPC). It is for example determined using a device such as Viscotek GPCMax, but not limiting to this specific device and following the exemplified but not limiting method. For the measurement triple -refractive index, light scattering, and viscosity- detectors can be used. In order to dissolve the polymer samples THF as solvent can be used. Molecular weight analysis with GPC instrument are performed with 5 mg/ml solutions of the polymers in Tetrahydrofuran, under a condition of eluent: tetrahydrofuran (THF) and flow rate: 1.0 mL/min. Two single-pore columns, of which exclusion limits are 400000 Da and 4000000 Da with styrene-divinylbenzene stationary phase, can be used. Polystyrene calibration samples having defined molecular weights can be used for calibration.

The polymeric stabilizer has preferably a solid content between 5 to 40% by weight, preferably between 10 and 30% by weight, more preferably between 25 and 30% by weight.

The solid content of the polymeric stabilizers is determined according to the method of ISO 3251:2019. In said method small aluminum trays (or bigger if necessary) are weighed and recorded as T1. The amount of the substance to be analyzed is weighed into already weighted tray and registered as T2. Same repeated for 3 times. Left the trays in oven at a specified time and temperature which is 20 min. and 150 °C. Trays are removed and cooled at room temperature and weighed, registered as T3. Solid content is calculated with the formula below and average of 3 trays is taken:

$$\text{Solid content \%} = (T3 - T1) / (T2\text{-}T1) * 100$$

In the second stage, the waterborne polymer composition is preferably obtained by polymerizing from 2 to 90% by weight of the polymeric stabilizer, preferably from 2 to 65%, more preferably from 40 to 60% by weight.

The expression "from 2 to 90% by weight of the polymeric stabilizer obtained in the first stage" means that the polymeric stabilizer is the product obtained in the first stage.

In the second stage, the amount of the at least recycled monomer is preferably from 1% to 100%, preferably from 2% to 95%, more preferably from 5 to 90%, more preferably from 10 to 90%, more preferably from 20 to 90%, even more preferably from 40 to 90%, even more preferably from 60 to 90% by weight, the percentage being based on the total amount of monomer in the second stage.

The recycled monomer is preferably methyl methacrylate.

In the second stage, the amount of the at least one carboxyl functional monomer amount is preferably from 0.1 to 60% by weight, more preferably from 1 to 40% by weight, even more preferably from 5 to 30% by weight, the percentage being based on the total amount of monomer in the second stage.

The carboxyl functional monomer is preferably chosen from the group comprising acrylic acid, methacrylic acid, crotonic acid, maleic acid, itaconic acid, mesaconic acid, fumaric acid, methylenemalonic acid, citraconic acid or mixtures thereof.

The polymeric stabilizer obtained in the first stage is preferably neutralized with at least one neutralizing agent to a pH value in between the range from 7 to 11. Generally, the resulting neutralized polymeric stabilizer is transparent or semitransparent. In the present invention, the term "semitransparent" means that a solution of the polymeric stabilizer of 2.5% by weight has a value below 35% when measured with light scattering test method.

In the second stage of the multistage emulsion polymerization, the polymerization is preferably made in the presence of a polymerization initiator.

In the second aspect of the invention previously described the polymerization in the first stage and in the second stage are preferably made in the presence of at least one polymerization initiator.

In the two previous aspects of the invention previously described, the flow of the polymerization initiator preferably ends 5 to 15 minutes after the beginning of the polymerization of the first stage and/or of the second stage.

The present invention also relates to a multistage emulsion polymerization process for producing a waterborne polymer composition, said process comprising the following successive steps:

    a. Forming a first mixture comprising:

        i. water;
        ii. at least one surfactant;
        iii. at least one ethylenically unsaturated monomer;
        iv. at least one recycled monomer;
        v. optionally at least one carboxyl functional monomer;
        vi. optionally at least one crosslinking functional or multi-ethylenically unsaturated monomer;

    b. Polymerizing said first mixture in the presence of at least one polymerization initiator;

c. Forming a second mixture comprising:

> i. at least the product obtained in the step b;
> ii. at least one surfactant;
> iii. optionally at least one recycled monomer;
> iv. optionally at least one crosslinking functional or multi-ethylenically unsaturated monomer;

d. Polymerizing said second mixture in the presence of at least one polymerization initiator to obtain the waterborne polymer composition;

Wherein the recycled monomer comprises from 200 ppm to 30.000 ppm by weight of methyl isobutyrate.

The present invention also relates to a multistage emulsion polymerization process for producing a waterborne polymer composition, said process comprising the following successive steps:

a. Forming a first mixture comprising:

> i. water;
> ii. at least one surfactant;
> iii. at least one ethylenically unsaturated monomer;
> iv. optionally at least one recycled monomer;
> v. optionally at least one carboxyl functional monomer;
> vi. optionally at least one crosslinking functional or multi-ethylenically unsaturated monomer;

b. Polymerizing said first mixture in the presence of at least one polymerization initiator;
c. Forming a second mixture comprising:

> i. at least the product obtained in step b;
> ii. at least one surfactant;
> iii. at least one recycled monomer;
> iv. optionally at least one crosslinking functional or multi-ethylenically unsaturated monomer;

d. Polymerizing said second mixture in the presence of at least one polymerization initiator to obtain the waterborne polymer composition;

Wherein the recycled monomer comprises from 200 ppm to 30.000 ppm by weight of methyl isobutyrate.

The present invention also relates to a multistage emulsion polymerization process for producing a waterborne polymer composition, said process comprising the following successive steps:

a. Forming a first mixture comprising:

> i. water;
> ii. at least one carboxyl functional monomer;
> iii. optionally at least one surfactant;
> iv. optionally at least one recycled monomer;
> v. optionally at least one crosslinking functional or multi-ethylenically unsaturated monomer;

b. Polymerizing said first mixture in the presence of at least one polymerization initiator, to produce a polymeric stabilizer;
c. Neutralizing the polymeric stabilizer with at least one neutralizing agent to a pH value in between the range from 7 to 11;
d. Forming a second mixture comprising:

> i. at least the neutralized polymeric stabilizer obtained in step c;
> ii. at least one recycled monomer;
> iii. optionally at least one surfactant;
> iv. optionally at least one crosslinking functional or multi-ethylenically unsaturated monomer;

e. Polymerizing said second mixture in the presence of at least one polymerization initiator to obtain the waterborne polymer composition;

Wherein the recycled monomer comprises from 200 ppm to 30.000 ppm by weight of methyl isobutyrate.

In the process described above, the flow of the polymerization initiator preferably ends 5 to 15 minutes after the beginning of the polymerization of step b and/or e.

The resulting polymer comprises from 1 to 100% by weight of at least one recycled monomer based on the total amount of monomers in said polymer. The same preferred ranges of recycled monomer amount as described above apply.

The first mixture of step a comprises water, preferably from 50 to 95% by weight of water, based on the total weight of said first mixture, more preferably from 60% to 80%.

The recycled monomer used in the process of the invention is preferably methyl methacrylate. It preferably comprises the same impurities at the same preferred levels as described in the above paragraphs concerning the waterborne polymer composition.

The polymeric stabilizer obtained at step b has preferably a solid content from 5 to 40% by weight, preferably between 10 and 30% by weight, more preferably between 25 and 30% by weight.

Use of the waterborne polymer composition

The present invention relates to the use of the waterborne polymer composition according to the invention, or the waterborne polymer composition resulting from process of the invention, to produce coating, paint, primer, ink, varnish, pressure sensitive adhesive, and use of said waterborne polymer composition as textile polymers in finishing, in coating, in flocking, or in nonwoven, or as textile auxiliaries in pretreatment, in dyeing, in printing, or in finishing, or as leather additive in wet end or in finishing, or as additive in construction.

The present invention also relates to a coating, paint, primer, ink, pressure sensitive adhesive, or varnish made with the waterborne polymer composition according to the invention or the waterborne polymer composition resulting from process of the invention.

The minimum film forming temperature of the waterborne polymer composition is between - 50°C and +50°C, preferably between -30°C and +30°C.

The waterborne polymer composition of the invention may be advantageously used in coating formulations such as interior or exterior paints, primers, plasters, trowel applied decorative coatings for architectural applications, also for industrial wood and metal coatings, coatings for plastic & composite surfaces, road marking paints, roof coatings, roof tile paints, printings inks and overprint varnishes, pressure sensitive adhesives such as paper label adhesive, packaging tape adhesive, protective film adhesive, lamination adhesive, contact adhesive, paper tape adhesive, masking tape adhesive, film label adhesive, cold seal-heatseal adhesive, flooring, adhesive, flexible packaging adhesive, tapes, protective films, packaging lamination, specialty paper, paper coating, paper impregnation binder, release binder, paper saturation binder etc., textile and leather applications such as finishing, coating, flocking, nonwoven, printing, wet end, finishing and construction applications such as waterproofing & sealing, cement modifiers, sealants, tile adhesives and grouts, self-leveling compounds and redispersible powders.

Another object of the invention

According to another object the invention, the invention relates to a waterborne polymer composition comprising a polymer obtained from 1 to 100% by weight of at least one recycled monomer, wherein the recycled monomer is recycled styrene, or its dimer, or its trimer, and comprises from 10 ppm to 3.000 ppm by weight of benzene.

Generally, the recycling of polystyrene leads to the production of about 60-65 % by weight of styrene, 20-25% by weight of its dimers and 10-15% by weight of its trimers.

According to this object of the invention, the recycled styrene, or its dimer, or its trimer comprises from 10 ppm to 3.000 ppm by weight of benzene, preferably from 20 ppm to 1.500ppm, more preferably from 50 ppm to 1.000 ppm, even more preferably from 100 ppm to 800 ppm, even more preferably from 200 ppm to 600 ppm.

According to this object of the invention, the recycled styrene, or its dimer, or its trimer also preferably comprises from 10 ppm to 3.000 ppm by weight of toluene, preferably from 20 ppm to 1.500ppm, more preferably from 50 ppm to 1.000 ppm, even more preferably from 100 ppm to 800 ppm, even more preferably from 200 ppm to 600 ppm.

According to this object of the invention, the recycled styrene, or its dimer, or its trimer also preferably comprises from 1 ppm to 25.000 ppm by weight of ethylbenzene, preferably from 20 ppm to 15.000ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

According to this object of the invention, the recycled styrene, or its dimer, or its trimer also preferably comprises from 1 ppm to 25.000 ppm by weight of cumene, preferably from 20 ppm to 15.000ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

According to this object of the invention, the recycled styrene, or its dimer, or its trimer also preferably comprises from 1 ppm to 25.000 ppm by weight of alpha-methyl styrene, preferably from 20 ppm to 15.000ppm, more preferably from 50 ppm to 10.000 ppm, even more preferably from 100 ppm to 8.000 ppm, even more preferably from 200 ppm to 5.000 ppm, even more preferably from 400 ppm to 3.000 ppm, even more preferably from 500 ppm to 2.000 ppm.

According to this object of the invention, the recycled styrene, or its dimer, or its trimer also preferably comprises from 1 ppm to 5.000 ppm by weight of 1,3-diphenylpropane, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

According to this object of the invention, the recycled styrene, or its dimer, or its trimer also preferably comprises from 1 ppm to 5.000 ppm by weight of 2,4-diphenyl-1-butene, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

According to this object of the invention, the recycled styrene, or its dimer, or its trimer also preferably comprises from 1 ppm to 5.000 ppm by weight of 2,4,6-triphenyl-1-hexene, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

According to this object of the invention, the recycled styrene, or its dimer, or its trimer also preferably comprises from 1 ppm to 5.000 ppm by weight of xylene, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

According to this object of the invention, the recycled styrene, or its dimer, or its trimer also preferably comprises from 1 ppm to 5.000 ppm by weight of isopropenyl benzene, preferably from 5 ppm to 2.000ppm, more preferably from 25 ppm to 1.000 ppm, even more preferably from 50 ppm to 800 ppm, even more preferably from 70 ppm to 600 ppm, even more preferably from 100 ppm to 500 ppm, even more preferably from 150 ppm to 400 ppm.

The recycled styrene or its dimer or its trimer preferably comprises 10 ppm to 3.000 ppm by weight of benzene, and at least one compound, preferably at least two, more preferably at least three, more preferably at least four, more preferably at least five, even more preferably at least six, even more preferably at least seven, even more preferably at least height compounds selected from the list comprising toluene, ethylbenzene, cumene, alpha-methyl styrene, 1,3-diphenylpropane, 2,4-diphenyl-1-butene, 2,4,6-triphenyl-1-hexene, xylene, isopropenyl benzene the amount of said compounds being selected from the respecify ranges described above.

The recycled styrene or its dimer or its trimer preferably comprises 10 ppm to 3.000 ppm by weight of benzene, and from 10 ppm to 3.000 ppm by weight of toluene, from 1 ppm to 25.000 ppm by weight of ethylbenzene, from 1 ppm to 25.000 ppm by weight of cumene, from 1 ppm to 25.000 ppm by weight of alpha-methyl styrene, from 1 ppm to 5.000 ppm by weight of 1,3-diphenylpropane, from 1 ppm to 5.000 ppm by weight of 2,4-diphenyl-1-butene, from 1 ppm to 5.000 ppm by weight of xylene, from 1 ppm to 5.000 ppm of isopropenyl benzene and from 1 ppm to 5.000 ppm by weight of 2,4,6-triphenyl-1-hexene

The recycled styrene is generally obtained via chemical recycling of polystyrene (PS).

Thermal cracking or pyrolysis process including the degradation of the polymeric material by heating under inert atmosphere is employed in chemical recycling of PS. Thermal decomposition of PS to styrene takes place at temperatures above ceiling temperature where the rate of propagation is equal to the rate of depropagation.

The determination of the amount of impurities in the recycled monomers is made by gas chromatography analysis, the same as described above.

According to this object of the invention, the polymer is preferably obtained:

- from 1 to 100 %by weight of at least one recycled styrene or its dimer or its trimer;
- optionally from 0.1 to 50% by weight of at least one additional monomer;
- optionally from 0.1 to 50% by weight of at least one biobased monomer.

Said polymer is preferably obtained from 2,5 to 95% of at least a recycled styrene or its dimer or its trimer, more preferably from 5 to 85%, even more preferably from 10 to 80 %, even more preferably from 15 to 70% by weight.

Said polymer is preferably obtained from at 5 to 97.5% by weight of at least one additional monomer, more preferably from 30 to 85% by weight. The additional monomer is preferably chosen from the same list as described above.

Said polymer is preferably obtained from at 0 to 70 to % by weight of at least one biobased monomer, more preferably from 5 to 50% by weight. The biobased monomer is preferably chosen from the same list as described above.

Said polymer has preferably a weight average molecular weight within the range of 100.000 to 20 million Daltons, preferably within the range of 200.000 to 10 million, more preferably within the range of 500.000 to 5 million Daltons. The same method as described above for the polymer apply.

According to this object of the invention, the waterborne polymer composition is preferably obtained by emulsion polymerization. The same preferences as described above concerning the emulsion polymerization apply to this object of the invention.

This object of the invention also relates to a multistage emulsion polymerization process for producing a waterborne polymer composition. The same preferences as described above apply.

This object of the invention also relates to the use of the waterborne polymer composition according to this object of the invention, or the waterborne polymer composition resulting from multistage emulsion polymerization process of said object, to produce coating, paint, primer, ink, varnish, pressure sensitive adhesive, and use of said waterborne polymer composition as textile polymers in finishing, in coating, in flocking, or in nonwoven, or as textile auxiliaries in pretreatment, in dyeing, in printing, or in finishing, or as leather additive in wet end or in finishing, or as additive in construction.

This object of the invention also relates to a coating, paint, primer, ink, pressure sensitive adhesive, or varnish made with the waterborne polymer composition according to this object of the invention or the waterborne polymer composition resulting from process of this aspect of the invention.

Another object of the invention

waterborne polymer composition comprising a polymer obtained from 1 to 100% by weight of at least one recycled monomer, wherein the recycled monomer is selected from the list comprising ethylenically unsaturated monomers preferably selected from the list comprising alkyl acrylates or alkyl methacrylates such as linear, branched or cycloaliphatic $C_i$-$C_{22}$-alkyl(meth)acrylates, methyl(meth)acrylate, ethyl(meth)acrylate,n-butyl(meth)acrylate, isobutyl-(meth)acrylate, lauryl(meth)acrylate, 2-ethylhexyl(meth)acrylate, stearyl-(meth)acrylate, cyclohexyl(meth)acrylate, isobornyl(meth)acrylate, 2-octyl- (meth)acrylate and tert-butyl(meth)acrylate, aryl(meth)acrylates, benzyl(meth)acrylate and phenyl(meth)-acrylate, tetrahydrofurfuryl(meth)acrylate, methoxyethoxyethyl(meth)- acrylate, 1 - butoxypropyl(meth)acrylate,cyclohexyloxymethyl(meth)acrylate,methoxymethoxyethyl(meth )acrylate, benzyloxymethyl(meth)acrylate, furfuryl-(meth)acrylate, 2-butoxy ethyl (meth)acrylate, 2-ethoxyethyl(meth)acrylate, allyloxymethyl(meth)acrylate, 1 - ethoxybutyl(meth)acrylate, 1 -ethoxyethyl- (meth)acrylate,ethoxymethyl(meth)acrylate, poly(ethyleneglycol)methyl-ether(meth)acrylate, and poly(propyleneglycol) methylether (meth)acrylate or aminoalkyl(meth)acrylates such as N,N-dimethyl aminoethyl (meth)acrylate, 2- trimethylammoniumethyl(meth)acrylatchloride and N,N-dimethyl amino-propyl(meth)acrylate, oxiranyl(meth)acrylates such as 2,3-epoxy butyl(meth)acrylate, 3,4-epoxy-butyl(meth)acrylate and glycidyl(meth)acrylate, styrenes, substituted styrenes such as a-methylstyrenes, 4-methylstyrenes, 4-vinylbenzoic acid and sodium-4-vinylbenzene sulfonate, vinylesters of carboxylic acids comprising 1 to 20 carbon atoms, especially vinylacetate, vinylesters of versatic acids such as VeoVa-10, 10, methacrylic acid, itaconic acid, crotonic acid, fumaric acid, n-butylacrylic acid, iso- butylacrylic acid, laurylacrylic acid, 2-ethylhexylacrylic acid, stearylacrylic acid, cyclohexylacrylic acid, isobornylacrylic acid and tert-butylacrylic acid.

**Examples**

**A) Synthesis of polymer emulsion with surfactant**

To a 3-necked flask equipped with stirrer, thermometer and a reflux condenser, 232.17 parts of deionized water was added and the temperature was heated to 88°C. 10.09 parts of 14.5 % of Sodium lauryl sulfate, 25.96 parts of 15% Emulsogen EPA 073 were added.

The solution composed of 2.11 parts of Ammonium persulfate, 2.11 parts of Sodium carbonate and 40.91 parts of deionized water, was added to the reactor at 88°C and the line was flushed with 5.1 parts of deionized water.

The feeding of first pre-emulsion, consists of 148.78 parts of deionized water, 4.25 parts of sodium lauryl sulfate, 107.37 parts MMA, 5.05 parts of Methacrylic acid, 41.14 parts of Ethyl acrylate and 167.65 parts of Butyl acrylate was started at 82°C and continued for 90 min.

The feeding of second pre-emulsion consists of 138.55 parts of deionized water, 4.25 parts of sodium lauryl sulfate, 6 parts of 30% acrylamide, 158.64 parts of MMA, 2.64 parts of Methacrylic acid, 41.14 parts of Ethyl acrylate with 40% bio-renewable content and 115.95 parts of Butyl acrylate was started at 82°C.

The total pre-emulsion feed duration was 90 min and the line was flushed with 15.3 parts of deionized water. The reaction temperature was maintained at 82°C for 30 minutes more and cooled down to 70°C.

The solution composed of 0.92 parts of t-Butyl hydroperoxide and 10.2 parts of deionized water was fed to the reactor in 15 minutes. After waiting 10 minutes, the solution composed of 0.82 parts of Bruggolite FF6M and 11.3 parts of deionized water was added to the reactor in 15 minutes.

The temperature of the reactor was cooled down below 50°C and the solution composed of 3.48 parts of 25% Ammonium hydroxide and 5.32 parts of deionized water was added to the reactor.

The reactor temperature was cooled down to room temperature.

One virgin methyl methacrylate (MMA) and height different recycled methyl methacrylate have been used (see Table 1).

As the result of this polymerization process, we therefore obtain nine emulsions described in the following table 1. They all have a solid content of 49.6% by weight, a pH comprised between 8.2 and 8.6, and a viscosity (LVT 2/60) is comprised between 250 cps and 500 cps.

Table 1 recapitulates the methyl isobutyrate content in each MMA, and the corresponding emulsions obtained with each MMA.

The percentage in weight based on the total amount of monomers of the multi-stage emulsion polymer are the following: MMA:41,48%; Methacrylic acid: 1,19%; Ethyl acrylate: 12,83%; Butyl acrylate:44,22%; Acrylamide: 0,28%.

Table 1: Amount of methyl isobutyrate in MMA used in the emulsion polymerization, and the corresponding emulsions.

| Example | Methyl methacrylate (MMA) | Methyl isobutyrate concentration in MMA in ppm |
|---|---|---|
| EM1 | Virgin MMA | 140 ppm |
| EM2 | Recyled MMA 1 | 250 ppm |
| EM3 | Recyled MMA 2 | 570 ppm |
| EM4 | Recyled MMA 3 | 910 ppm |
| EM5 | Recyled MMA 4 | 1280 ppm |
| EM6 | Recyled MMA 5 | 5.450 ppm |
| EM7 | Recyled MMA 6 | 12.360 ppm |
| EM8 | Recyled MMA 7 | 19.860 ppm |
| EM9 | Recyled MMA 8 | 22.490 ppm |

**B) Synthesis of polymer emulsion with polymeric stabilizer**

B1) Synthesis of Polymeric Stabilizer

To a 3-necked flask equipped with stirrer, thermometer, and a reflux condenser, 670.7 parts of deionized water was added, and the reactor temperature was heated to 86 °C. 6,5 parts of ADEKA SR-1025 was added to the reactor. 24.6 parts of pre-emulsion taken from the total monomer emulsion was added to the reactor, wherein the total monomer emulsion consists of 166.82 parts of deionized water, 22 parts of ADEKA SR 1025, 300 parts of methyl methacrylate, 6.92 parts of n-Dodecyl mercaptane, 0.4 parts ethylene glycol diacrylate, 56,68 parts of ethyl acrylate, 27 parts of methacrylic acid. 0.50 parts of Ammonium persulfate dissolved in 25.1 parts of deionized water was added to the reactor.

After that, the remaining part of the pre-emulsion was fed at 85°C in 60 min to the reactor in parallel with 1.06 parts of ammonium persulfate dissolved in 85.4 parts of deionized water. The initiator solution finished 10 minutes after the pre-emulsion feed.

The temperature of the reaction was kept at 85°C 60 minutes more and 17 parts of 25% of ammonium hydroxide was added in 20 min at 80°C. The reaction temperature was maintained at 80°C, 120 minutes more.

One virgin methyl methacrylate (MMA) and two different recycled methyl methacrylate have been used. As the result of this polymerization process, we therefore obtain three polymeric stabilizers PS1, PS2 and PS3.

Table 2 recapitulates the methyl isobutyrate content in each MMA and the corresponding Polymeric Stabilizer made with the different MMA.

All the polymeric stabilizer have a solid content of 27.6% by weight, a pH comprised between 8.2 and 8.3, and a viscosity (LVT 2/60) is comprised between 40 cps and 60 cps.

Table 2: Amount of methyl isobutyrate in MMA, and corresponding Polymeric Stabilizers.

| Methyl methacrylate (MMA) | Methyl isobutyrate concentration in MMA in ppm | Corresponding Polymeric Stabilizer made with MMA |
|---|---|---|
| Virgin MMA | 140 ppm | PS1 |

(continued)

| Methyl methacrylate (MMA) | Methyl isobutyrate concentration in MMA in ppm | Corresponding Polymeric Stabilizer made with MMA |
|---|---|---|
| Recyled MMA 4 | 1.280 ppm | PS2 |
| Recyled MMA 8 | 22.490 ppm | PS3 |

The percentage in weight based on the total amount of monomers of the polymeric stabilizer are the following: MMA: 78.11% ; ethylene glycol diacrylate:0.1% ; ethylacrylate :14,76%, and methacrylic acid:7.03%.

<u>B2) Synthesis of Emulsion</u>

To a 3-necked flask equipped with stirrer, thermometer, and a reflux condenser, 717 parts of resulting polymeric stabilizer of part B1) was added and the line was washed with 62 parts of deionized water.

The temperature of the reactor was increased to 55°C. The feeding of monomer emulsion was done in 30 min, which consists of 100 parts of methyl methacrylate, 64 parts of ethyl acrylate, 119,63 parts of 2-ethylhexyl acrylate. The reactor was maintained at 50°C for 30 min more. 0.50 parts of ter-butylhydroperoxide dissolved in 10.18 parts of water was fed to the reactor in 10 minutes. After that, 0.44 parts of Bruggolite FF6 M dissolved in 13.0 parts of water was fed to the reactor in 10 minutes.

The reactor was maintained at 85°C for 30 min more. The reactor temperature was cooled down to 70°C and 0.30 parts of ter-butylhydroperoxide dissolved in 7.0 parts of water was fed to the reactor in 10 minutes. After that, 0.25 parts of Bruggolite FF6 M dissolved in 7.0 parts of water was fed to the reactor in 10 minutes.

The reactor temperature was cooled down to 55°C and 60 parts of water was added to the reactor in 15 min. The reactor cooled down to room temperature.

The same virgin MMA and the height recycled MMA from part A) have been used in the emulsion polymerization described above.

As the result of this polymerization process, we therefore obtain emulsions described in the following table 3.

Table 3: Emulsion description

| Example | Polymeric Stabilizer used | Methyl methacrylate (MMA) used in the emulsion polymerization | Methyl isobutyrate concentration in MMA used in the emulsion polymerization (in ppm) |
|---|---|---|---|
| EM10 | PS1 | Virgin | 140 ppm |
| EM11 | PS1 | Recyled MMA 1 | 250 ppm |
| EM12 | PS1 | Recyled MMA 2 | 570 ppm |
| EM13 | PS1 | Recyled MMA 3 | 910 ppm |
| EM14 | PS1 | Recyled MMA 4 | 1280 ppm |
| EM15 | PS1 | Recyled MMA 5 | 5.450 ppm |
| EM16 | PS1 | Recyled MMA 6 | 12.360 ppm |
| EM17 | PS1 | Recyled MMA 7 | 19.860 ppm |
| EM18 | PS1 | Recyled MMA 8 | 22.490 ppm |
| EM19 | PS2 | Recyled MMA 1 | 250 ppm |
| EM20 | PS2 | Recyled MMA 2 | 570 ppm |
| EM21 | PS2 | Recyled MMA 3 | 910 ppm |
| EM22 | PS2 | Recyled MMA 4 | 1280 ppm |
| EM23 | PS2 | Recyled MMA 5 | 5.450 ppm |
| EM24 | PS2 | Recyled MMA 6 | 12.360 ppm |
| EM25 | PS2 | Recyled MMA 7 | 19.860 ppm |

(continued)

| Example | Polymeric Stabilizer used | Methyl methacrylate (MMA) used in the emulsion polymerization | Methyl isobutyrate concentration in MMA used in the emulsion polymerization (in ppm) |
|---|---|---|---|
| EM26 | PS2 | Recyled MMA 8 | 22.490 ppm |
| EM27 | PS3 | Recyled MMA 1 | 250 ppm |
| EM28 | PS3 | Recyled MMA 2 | 570 ppm |
| EM29 | PS3 | Recyled MMA 3 | 910 ppm |
| EM30 | PS3 | Recyled MMA 4 | 1280 ppm |
| EM31 | PS3 | Recyled MMA 5 | 5.450 ppm |
| EM32 | PS3 | Recyled MMA 6 | 12.360 ppm |
| EM33 | PS3 | Recyled MMA 7 | 19.860 ppm |
| EM34 | PS3 | Recyled MMA 8 | 22.490 ppm |

The percentage by weight of the polymeric stabilizer is 71.65%. The percentage by weight of MMA is 10.0%. The percentage by weight of ethylacrylate is 6.4%. The percentage by weight of 2-ethylhexyl acrylate is 11.95%.

**C) Tests Results**

The Emulsions obtained in part A) and B) have been tested as coating with the following application tests.

Hardness

Hardness of the coating films were measured using Persoz or König Pendulum. 150 $\mu$m WFT (wet film thickness) applied on glass panel and left to be dried at climatic conditions (23°C and 50% RH). Evaluation of the hardness of paints and related coatings were done in accordance with EN ISO 1522:2006. The procedure as per Persoz is, based on the measurement of the damping of a pendulum oscillating on the paint film.

Stain Resistance

Chemical resistances of the coating films were measured according to EN 12720 (Furniture - Assessment of surface resistance to cold liquids). 2*200 $\mu$m WFT applied on beech veneer panel, after 1st layer it is dried for 4 hours @50°C and sanded. Then 2nd coat is applied and dried for 7 days @23°C. Stains were applied on cured film for different time periods. After removal and cleaning of the stains from the surface, visual evaluation was made based on numerical rating, coded from 1 to 5. (5: best; 1: worst)
The 12 Stain Tests are the following: Ammonia (2 min), Ethanol (1h), Coffee (1h), Coffee (6h), Mustard (6h), red wine (6h), ethanol (16h), water (16h), water (24h), hand cream Atrix (16h), linoleic fatty acid (1h), linoleic fatty acid (5h).
The rating for Stain resistance is the following.

5: no change.

4: Minor Change: No change in surface structure: change only visible from one viewing direction, only color change, gloss, discoloration.

3: Moderate Change: No change in surface structure: change only visible from several viewing directions, only color change, gloss, discoloration.

2: Significant Change: Change visible in all viewing directions, color change, gloss, discoloration, and/or also minor structure defects.

1: Strong Change: Distinctive change in structure and/or change in gloss, color and discoloration, and/or paper adheres to surface and/or coating has peeled off.

Blocking Resistance

Blocking resistance of the coating films were measured for furniture applications according to the Internal Method as explained hereinbelow: 200 µm WFT applied on PVC sheets, dried for 60 minutes @50°C; then two pieces closed face-to-face and blocked under 5 kg for 3 hours @50°C. After that, test pieces were separated from each other, and the blocking resistance was evaluated as mentioned in ASTM-D 4946 based on numerical rating code from 1 to 10. (10: best; 1: worst).

Film appearance (wet / dry look)

Wet Film with 200µm thickness, applied on multi veneer wood surface (beech, cherry, oak, white birch, walnut and mahogany). Wet film appearance was observed visually. After drying of the coating, dry film appearance was examined similarly.

**Results of the Tests for emulsions of part A) (with surfactant)**

First, the results of Stain resistance are the following. The 12-stain tests are rated 5 for all emulsions EM1 to EM9.

These results show that the coatings made with the emulsions EM2 to EM9 made with the recycled methyl methacrylate have the same performances compared to the coating made with EM1 made with the virgin methyl methacrylate.

These results demonstrate that, despite the presence of a high level of methyl isobutyrate in the recycled methyl methacrylate, the stain resistance is not affected, even when the level of methyl isobutyrate is very high, for example more than 100 times the level of methyl isobutyrate in the virgin MMA.

The hardness of the coatings made with EM 1 to EM9 are the same with a value of 90.

The blocking resistance of the coatings made with EM1 to EM9 are the same with a value of 8.

The wet film appearances of the coatings made with EM1 to EM9 are clear and satisfactory.

The dry film appearances of the coatings made with EM1 to EM9 is satisfactory. Some coatings have a better wood warming (Emulsion made with recycled MMA having more than 500 ppm of methyl isobutyrate).

These results show that the hardness and the blocking resistance of the coating made with the emulsions EM2 to EM9 made with the recycled methyl methacrylate have the same performances compared to the coating made with EM1 made with the virgin methyl methacrylate.

The results show that the appearance of coating film is maintained and not degraded.

These results demonstrate that, despite the presence of a high level of methyl isobutyrate in the recycled methyl methacrylate, the hardness, the blocking resistance, and the film appearance is not affected, even when the level of methyl isobutyrate is very high, for example more than 100 times the level of methyl isobutyrate in the virgin MMA.

**Results of the Tests for emulsions of part B) (with polymeric stabilizer)**

First, the results of Stain resistance are the following. The 12-stain tests are rated 5 for all emulsions EM10 to EM34.

These results show that the coatings made with the emulsions EM11 to EM34 made with the recycled methyl methacrylate have the same performances compared to the coating made with EM1 made with the virgin methyl methacrylate.

These results demonstrate that, despite the presence of a high level of methyl isobutyrate in the recycled methyl methacrylate, the stain resistance is not affected, even when the level of methyl isobutyrate is very high, for example more than 100 times the level of methyl isobutyrate in the virgin MMA.

The hardness of the coatings made with EM10 to EM34 are the same with a value of 90.

The blocking resistance of the coatings made with EM10 to EM34 are the same with a value of 8.

The wet film appearances of the coatings made with EM10 to EM34 are clear and satisfactory.

The dry film appearances of the coatings made with EM10 to EM34 is satisfactory. Some coatings have a better wood warming (Emulsion made with recycled MMA having more than 500 ppm of methyl isobutyrate).

These results show that the hardness and the blocking resistance of the coating made with the emulsions EM11 to EM34 made with the recycled methyl methacrylate have the same performances compared to the coating made with EM10 made with the virgin methyl methacrylate.

The results show that the appearance of coating film is maintained and not degraded.

These results demonstrate that, despite the presence of a high level of methyl isobutyrate in the recycled methyl methacrylate, the hardness, the blocking resistance, and the film appearance is not affected, even when the level of methyl isobutyrate is very high, for example more than 100 times the level of methyl isobutyrate in the virgin MMA.

**D) Additional Examples**

Two other recycled methyl methacrylate have been tested, and have the following levels of impurities described in Table 4.

Table 4: Level of impurities in recycled MMA 9 and 10

| MMA | Methyl isobutyrate ppm | Methacrylate ppm | Methyl propanoate ppm | Ethylacrylate ppm | Methyl pivalate ppm |
|---|---|---|---|---|---|
| Virgin | 140 | 0 | 70 | 0 | 0 |
| Recycled MMA 9 | 20.310 | 9.020 | 3.280 | 4.850 | 6.030 |
| Recycled MMA 10 | 21.500 | 10.680 | 4.060 | 3.660 | 3.240 |

The same process as in part A and B have been made to obtain polymer emulsions that have been tested according to the same tests as in part C.

These results show that the stain resistances, the hardness, the blocking resistance and the film appearance of the coatings made with the emulsions made with the recycled methyl methacrylate 9 and 10 are identical to the coating made with the EM 1 and EM 10 with the virgin MMA.

These results demonstrate that, despite the presence of a very high level of impurities in the recycled methyl methacrylate, the coating performances are not affected.

**Claims**

1.   Waterborne Polymer composition comprising a polymer obtained from 1 to 100% by weight of at least one recycled monomer, wherein the recycled monomer comprises from 200 ppm to 30.000 ppm by weight of methyl isobutyrate.

2.   Waterborne Polymer composition according to claim 1, wherein the recycled monomer comprises from 1 ppm to 15.000 ppm by weight of methylacrylate.

3.   Waterborne Polymer composition according to any of the previous claims, wherein the recycled monomer comprises from 100 ppm to 10.000 ppm by weight of methyl propanoate.

4.   Waterborne Polymer composition according to any of the previous claims, wherein the recycled monomer comprises from 1 ppm to 15.000 ppm by weight of ethyacrylate.

5.   Waterborne Polymer composition according to any of the previous claims, wherein the recycled monomer comprises from 1 ppm to 15.000 ppm by weight of methyl pivalate.

6.   Waterborne Polymer composition according to any of the previous claims, wherein the recycled monomer is methyl methacrylate.

7.   Waterborne Polymer composition according to any of the previous claims, wherein the polymer is obtained:

   - from 1 to 100 % by weight of at least one recycled monomer;
   - optionally from 0.1 to 50% by weight of at least one additional monomer;
   - optionally from 0.1 to 50% by weight of at least one biobased monomer.

8.   Waterborne Polymer composition according to any of the previous claims, wherein the polymer is obtained:

   - from 1 to 100 %by weight of at least one recycled monomer;
   - from 0.1 to 50% by weight of at least one additional monomer;
   - from 0.1 to 50% by weight of at least one biobased monomer having a biobased carbon content between 10% by weight and 100% by weight relative to the total weight of carbon of said monomer, the biobased carbon content being measured according to ASTM D6866-22 Standard.

9. Waterborne Polymer composition according to any of the previous claims, wherein said polymer is obtained by emulsion polymerization.

10. Waterborne Polymer composition according to claim 9, wherein said polymer is obtained by emulsion polymerization process comprising:

   a. Preparing a mixture comprising at least one surfactant and/or at least one polymeric stabilizer, and at least one recycled monomer;
   b. Initiating the polymerization;
   c. Obtaining a polymer emulsion.

11. Multistage emulsion polymerization process for producing a waterborne polymer composition, said process comprising the following successive steps:

   a. Forming a first mixture comprising:

      i. water;
      ii. at least one surfactant;
      iii. at least one ethylenically unsaturated monomer;
      iv. at least one recycled monomer;
      v. optionally at least one carboxyl functional monomer;
      vi. optionally at least one crosslinking functional or multi-ethylenically unsaturated monomer;

   b. Polymerizing said first mixture in the presence of at least one polymerization initiator;
   c. Forming a second mixture comprising:

      i. at least the product obtained in the step b;
      ii. at least one surfactant;
      iii. optionally at least one recycled monomer;
      iv. optionally at least one crosslinking functional or multi-ethylenically unsaturated monomer;

   d. Polymerizing said second mixture in the presence of at least one polymerization initiator to obtain the waterborne polymer composition;

   Wherein the recycled monomer comprises from 200 ppm to 30.000 ppm by weight of methyl isobutyrate.

12. Multistage emulsion polymerization process for producing a waterborne polymer composition, said process comprising the following successive steps:

   a. Forming a first mixture comprising:

      i. water;
      ii. at least one surfactant;
      iii. at least one ethylenically unsaturated monomer;
      iv. optionally at least one recycled monomer;
      v. optionally at least one carboxyl functional monomer;
      vi. optionally at least one crosslinking functional or multi-ethylenically unsaturated monomer;

   b. Polymerizing said first mixture in the presence of at least one polymerization initiator;
   c. Forming a second mixture comprising:

      i. at least the product obtained in step b;
      ii. at least one surfactant;
      iii. at least one recycled monomer;
      iv. optionally at least one crosslinking functional or multi-ethylenically unsaturated monomer;

d. Polymerizing said second mixture in the presence of at least one polymerization initiator to obtain the waterborne polymer composition;

Wherein the recycled monomer comprises from 200 ppm to 30.000 ppm by weight of methyl isobutyrate.

13. Multistage emulsion polymerization process for producing a waterborne polymer composition, said process comprising the following successive steps:

   a. Forming a first mixture comprising:

      i. water;
      ii. at least one carboxyl functional monomer;
      iii. optionally at least one surfactant;
      iv. optionally at least one recycled monomer;
      v. optionally at least one crosslinking functional or multi-ethylenically unsaturated monomer;

   b. Polymerizing said first mixture in the presence of at least one polymerization initiator, to produce a polymeric stabilizer;
   c. Neutralizing the polymeric stabilizer with at least one neutralizing agent to a pH value in between the range from 7 to 11;
   d. Forming a second mixture comprising:

      i. at least the neutralized polymeric stabilizer obtained in step c;
      ii. at least one recycled monomer;
      iii. optionally at least one surfactant;
      iv. optionally at least one crosslinking functional or multi-ethylenically unsaturated monomer;

   e. Polymerizing said second mixture in the presence of at least one polymerization initiator to obtain the waterborne polymer composition;

   Wherein the recycled monomer comprises from 200 ppm to 30.000 ppm by weight of methyl isobutyrate.

14. Use of the waterborne polymer composition according to claim 1 to 10, or of the waterborne polymer composition resulting from process according to claim 11 to 13 to produce coating, paint, primer, ink, varnish, pressure sensitive adhesive, and use of said waterborne polymer composition as textile polymers in finishing, in coating, in flocking, or in nonwoven, or as textile auxiliaries in pretreatment, in dyeing, in printing, or in finishing, or as leather additive in wet end or in finishing, or as additive in construction.

15. Coating, paint, primer, ink, pressure sensitive adhesive, or varnish made with the waterborne polymer composition according to claim 1 to 10, or of the waterborne polymer composition resulting from process according to claim 11 to 13.

Europäisches
Patentamt

European
Patent Office

Office européen
des brevets

# EUROPEAN SEARCH REPORT

Application Number

EP 22 21 4092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 4 402153 B1 (HONNY CHEMICAL IND) 20 January 2010 (2010-01-20) | 1-10 | INV.<br>C09D133/08 |
| Y | * paragraphs [0001], [0030]; examples 1-5; table 1 * | 11-15 | C08F265/06 |
| Y | European Commission: "H 2 C CH 3 CH 3 O O CAS No: 80-62-6 ent Report European Union Risk Assessm methyl methacrylate 1 st Priority List Volume: 22 European Chemicals Bureau PL-1 22 Institute for Health and Consumer Protection European Chemicals Bureau Existing Substances methyl methacrylate European Union Risk Assessment",<br><br>1 January 2002 (2002-01-01), XP055255912, Retrieved from the Internet: URL:http://echa.europa.eu/documents/10162/7c9a0eb6-9b7f-4fd6-846b-d480e8e0003d [retrieved on 2016-03-07] * page 5, paragraph 1.2 * | 11-15 | |
| Y | Mmatwo: "First successful depolymerization trials in June, October and November 2020",<br><br>1 January 2021 (2021-01-01), XP093030697, Retrieved from the Internet: URL:https://www.mmatwo.eu/wp-content/uploads/2021/01/MMAtwo_Newsletter_January-2021_VF.pdf [retrieved on 2023-03-10] * page 3 * | 11-15 | |

TECHNICAL FIELDS SEARCHED (IPC)

C09D
C08F

The present search report has been drawn up for all claims

| Place of search | Date of completion of the search | Examiner |
|---|---|---|
| The Hague | 17 March 2023 | Jegou, Gwénaëlle |

EPO FORM 1503 03.82 (P04C01)

## ANNEX TO THE EUROPEAN SEARCH REPORT
## ON EUROPEAN PATENT APPLICATION NO.

EP 22 21 4092

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2023

| Patent document cited in search report | | Publication date | Patent family member(s) | | Publication date |
|---|---|---|---|---|---|
| JP 4402153 | B1 | 20-01-2010 | JP | 4402153 B1 | 20-01-2010 |
| | | | JP | 2010121027 A | 03-06-2010 |

EPO FORM P0459

For more details about this annex : see Official Journal of the European Patent Office, No. 12/82